# EUROPEAN PATENT SPECIFICATION

(11) **EP 4 031 407 B1**
(45) Date of publication and mention of the grant of the patent: **01.11.2023**
(21) Application number: 20772279.4
(22) Date of filing: 15.09.2020
(51) Int. Cl.: B60M 1/34, B60L 5/40, B61L 25/02

(54) **SYSTEM AND METHOD FOR ELECTRICAL FEEDING OF ROAD VEHICLES**
SYSTEM UND VERFAHREN ZUR ELEKTRISCHEN SPEISUNG VON STRASSENFAHRZEUGEN
SYSTÈME ET PROCÉDÉ POUR L'ALIMENTATION ÉLECTRIQUE DE VÉHICULES ROUTIERS

(30) Priority: 16.09.2019 SE 1951044
(43) Date of publication of application: 27.07.2022
(73) Proprietor: Elways AB, 171 60 Solna (SE)
(72) Inventor: ASPLUND, Gunnar, 171 60 SOLNA (SE)
(74) Representative: Groth & Co. KB
(86) International application number: PCT/EP2020/075743
(87) International publication number: WO 2021/052948

(56) References cited:
- EP-A2- 2 994 337
- EP-B1- 2 994 337
- DE-T2- 60 310 983
- US-A1- 2013 020 164

## Description

### TECHNICAL FIELD

The invention relates to a system and a method for electrical feeding of road vehicles.

### BACKGROUND

Concerns about the environmental impact of combustion of fossil fuels have led to an increased interest in electric vehicles, which have several potential benefits compared to vehicles with conventional internal combustion engines, including: a significant reduction of urban air pollution, as they do not emit harmful tailpipe pollutants from the on-board source of power at the point of operation; reduced greenhouse gas emissions from the on-board source of power, depending on the fuel and technology used for electricity generation and/or charging the batteries and reduced dependency on fossil fuels with increasingly variable supply and fluctuating prices.

However, the expense, weight and limited capacity of the lithium-ion battery packs of today limit widespread use of electric power as the main source of power in vehicles.

WO 2011/123049 proposes complementing the battery of the electric vehicle with electric feeding of the vehicle while driving. A system is disclosed for electric propulsion of a vehicle along a road comprising rail elements/structures having grooves provided with electric conductors therein that may be put under voltage and located in longitudinal tracks or channels in the road. The vehicle is equipped with a current collector which during contact with the electric conductors allows for transfer of electric power between the electric conductors and the vehicle to propel the vehicle and charge its battery or set of batteries.

US 2013 020 164 A1 discloses a further system for electrical feeding of road vehicles.

The stretch of road carrying the rail elements is divided into electrically separated road sections oriented in series, whereby the rail elements are only put under voltage when a vehicle with its current collector passes the relevant road section.

In practical implementations of such systems, safety concerns have been raised concerning the risk that the vehicle body may be subjected to live voltage if an isolation error would occur. This may be solved by galvanically separating the electric current provided from the road from the vehicle, for example using a switching high frequency transformer arrangement. In case of an isolation error, the main safety issue is that the vehicle could risk subjecting pedestrians and other people in the vicinity of the vehicle to live voltage. Another solution is therefore to disable electric feeding of the vehicle at lower speeds, such as below 20 km/h.

### SUMMARY

An object of the invention is to solve the safety problems discussed in the background section above in an improved manner.

These and other objects are achieved by the present invention by means of a system and a method according to the independent claims.

According to the invention, a system for electrical feeding of road vehicles, defined by the features of claim 1, is provided.

In other words, the at least one rail element is, in addition to the at least one electric conductor, also provided with at least one ground conductor extending along the lengthwise direction thereof. The ground conductor(s) is/are not solely provided to ground the rail element itself, but co-acts with ground contact element(s) of the current collector which is electrically connected to a chassis and/or body portion of the vehicle. Since the vehicle is grounded, any isolation error can not result in the vehicle body or chassis being subjected to live voltage. Consequently, there is no need for galvanic separation, and electric feeding can be performed also at low speeds, or even standstill. As explained above, the ground contact element(s) are part of the current collector. The ground contact element(s) may alternatively be arranged on a separate ground collector which is displaceable laterally and vertically in the same sense as the current collector. Such a ground collector may however also be considered part of the current collector.

In order to maintain sufficient safety without using galvanic separation, it is important to ensure that electric contact with ground is maintained at all times. This may be achieved using two or more parallel connections to ground and control means configured to use these parallel connections, as will be described below.

In embodiments, the current collector comprises at least two ground contact elements, and the rail element is provided with at least two electrically conducting ground conductors, each being connectable to ground potential, where each ground contact element is configured to be brought in electrical and mechanical contact with a corresponding ground conductor. It is understood that the at least two electrically conducting ground conductors do not necessarily need to be two separate physical objects but may be formed as two portions or contact surfaces of a single electrically conducting object or conductor, e.g. that one conductor is provided with two ground contact surfaces. The system may furthermore comprise control means configured to:
- measure electrical resistance between the ground contact elements;
- determine if the resistance is above a predetermined value;
- provide, if the resistance is above said predetermined value, a warning signal indicating that the vehicle is not sufficiently grounded.

The predetermined resistance value may be in the range of 1-100 ohms.

It is understood that the step to measure is preceded by electrically disconnecting the ground contact elements from the vehicles' chassis or body. The control means may furthermore be configured to send, in response to the warning signal, a control signal to the current collector, or displacement means configured to co-act with the current collector, to displace the current collector or at least parts thereof, to release the at least one contact element from contact with the at least one electrical conductor. In embodiments, the control signal is sent only if the vehicle speed is below a predetermined level, for instance 20 km/h.

In embodiments, the at least one ground conductor, or contact surface(s)/portion(s) of the ground conductor(s), is disposed on vertical side wall portion(s) of the at least one groove in the rail element, and the current collector is configured to press the corresponding ground contact element(s) laterally towards the ground conductor(s) to make contact therewith. In embodiments with two ground conductors, or a ground conductor having two contact surfaces, the ground conductors or contact surfaces are disposed on opposite vertical side wall portions to balance out the forces exerted by the current collector on the rail element. In an analogous manner, in embodiments with two electric conductors, they are advantageously also disposed on opposite vertical side wall portions.

The electric conductor(s) and ground conductor(s) are advantageously disposed in common groove(s) being vertically or laterally separated from each other in said common groove(s), i.e. a common groove may comprise both one or more electric conductors and one or more ground conductors. In alternative embodiments, the least one electrically conducting ground conductor is provided in at least one groove in the rail being separate from the at least one groove carrying the at least one electric conductor.

According to the invention, a method for electrical feeding of a road vehicle in a system according to claim 1 is provided. The method comprises connecting the at least one electric conductor to a source of electric power, connecting the at least one electrically conducting ground conductor to ground potential, and displacing the current collector vertically and/or laterally to connect mechanically and electrically with the at least one electric conductor and with the at least one ground conductor. Further, all features and advantages of embodiments described above with reference to the claimed system may be applied in corresponding embodiments of the claimed method.

### BRIEF DESCRIPTION OF THE DRAWINGS

Above discussed and other aspects of the present invention will now be described in more detail using the appended drawings, which show presently preferred embodiments of the invention, wherein:
fig. 1 shows a cross section view of an embodiment of a system according to the invention,
fig. 2 shows a cross section view of parts of another embodiment of a system according to the invention,
fig. 3 shows a cross section view of parts of yet another embodiment of a system according to the invention,
fig. 4 shows a flow chart illustrating an embodiment of a method according to invention, and
fig. 5 shows a flow chart illustrating additional methods steps comprised in another embodiment of a method according to the invention

### DETAILED DESCRIPTION

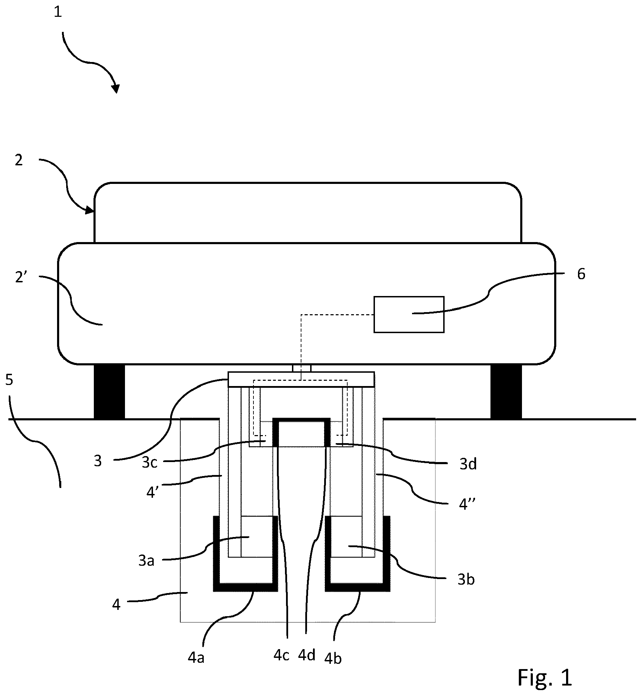

Fig. 1 shows a cross section view of an embodiment of a system according to the invention. The system comprises an electrically propellable vehicle 2 and a rail element 4 comprising two electric conductors 4a, 4b, each arranged in a corresponding groove 4', 4" in the rail element. In the figure, the rail element is greatly exaggerated in size for clarity reasons. The electric conductors are put under voltage for supplying electric power to the vehicle. The rail element 4 is further provided with electrically conducting ground conductors 4c, 4d connected to ground potential. The ground conductors are provided as a single U-shaped unit made from electrically conducting metal arranged at a top centre portion of the rail element between the grooves 4', 4" with its shanks extending downwards into the respective groove. From the cross section shown in fig. 1, it is understood that the conductors 4a-d extend in the longitudinal direction of the rail element. The vehicle 2 is provided with a current collector 3 provided with contact elements 3a, 3b, 3c, 3d each arranged at a lower end of a corresponding collector arm extending into the grooves 4', 4". The contact elements 3a, 3b are configured to be brought in sliding electrical and mechanical contact with a corresponding conductor 4a, 4b, while the ground contact elements 3c, 3d are configured to be brought in sliding electrical and mechanical contact with a corresponding ground conductor 4c, 4d. The at least one ground contact element is electrically connected to a chassis and/or body portion 2' of the vehicle. The contact elements 3a, 3b make contact with a vertical wall portion of the corresponding conductor 4a, 4b, which in this embodiment are provided as U-shaped beams or profiles at the bottom of the grooves 4', 4". In other embodiments, the conductors 4a, 4b may be plate- or rod-shaped or the like and be disposed on or in vertical side wall portions of the grooves 4', 4", while the contact elements make contact in the same manner as shown in fig. 1. In the same manner, the ground contact elements make contact with vertical wall portions of the ground conductors 4c, 4d.

The system furthermore comprises control means 6, such as an ECU, being in electrical contact with at least the ground contact elements 3c, 3d (as indicated by the dotted lines in the figure). The control means is configured to electrically disconnect the ground contact elements 3c, 3d from the vehicles' chassis or body, measure electrical resistance between the ground contact elements, determine if the resistance is above a predetermined value and to provide, if the resistance is above said predetermined value, a warning signal indicating that the vehicle is not sufficiently grounded. The control means may furthermore be configured to send a control signal to the current collector, or to displacement means configured to co-act with the current collector, to displace the current collector to release the contact elements from contact with the electric conductors. The control signal is sent regardless of vehicle speed, i.e. electrical feeding of the vehicle is interrupted even at higher speeds if the vehicle is not sufficiently grounded. In other embodiments however, the control signal is sent only if the vehicle speed is below a predetermined level, for instance 20 km/h. The current collector is typically released from contact with the conductors by displacing the contact elements upwards/vertically by tilting the collector arms (holding the contact elements) backwards/upwards or by tilting the current collector as a whole backwards/upwards, as seen in the direction of travel. The current collector is furthermore displaceable laterally. The movement of a current collector is described in detail in applicants' earlier applications and will not be described in further detail here.

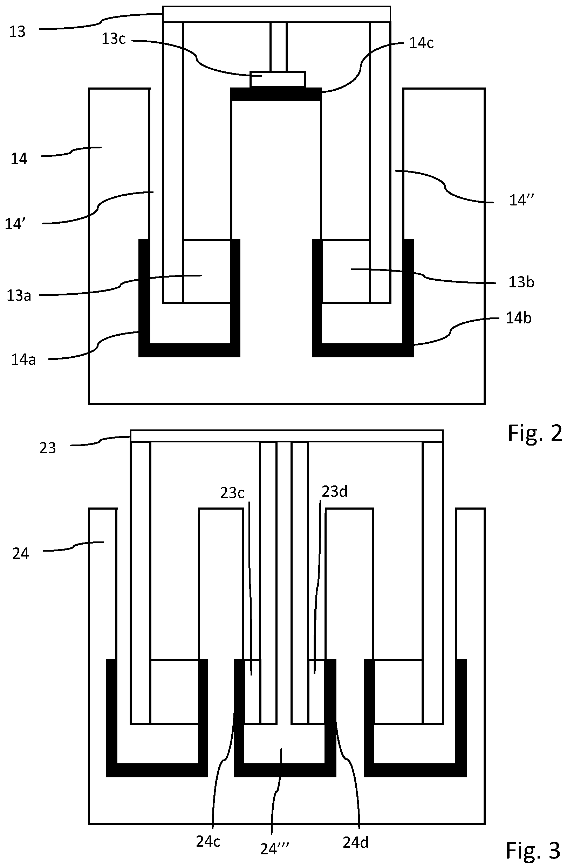

Fig. 2 shows a cross section view of a rail element and a current collector of another embodiment of a system according to the invention. This embodiment differs from the embodiment in fig. 1 in that the rail element 14 and the current collector 13 are different. In this embodiment, the rail element is provided with a single ground conductor 14c arranged at the top of the rail element between the grooves 14', 14". A single ground contact element 13c of the current collector 13 is arranged in sliding electrical contact with the conductor 14c.

Fig. 3 shows a cross section view of a rail element and a current collector of yet another embodiment of a system according to the invention. This embodiment differs from the embodiment in figs. 1 and 2 in that the rail element 24 and the current collector 23 are different. In this embodiment, the rail element is provided with a third groove 24‴ in which the ground conductors 24c, 24d are provided as one unit in the form of a U-shaped beam or profile at the bottom of the groove (in the same way as the electric conductors 4a, 4b in fig. 1). The current collector 23 is provided with two ground contact elements 23c, 23d arranged at the bottom end of corresponding collector arms. The contact elements are pressed laterally outwardly, i.e. in opposite directions, towards vertical side wall portions of the groove 24‴ to make contact with the corresponding ground conductor.

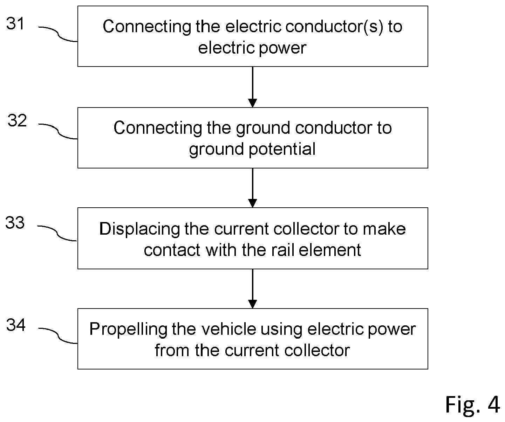

Fig. 4 shows a flow chart illustrating an embodiment of a method according to the invention. The method comprises connecting 31 the at least one electric conductor to a source of electric power, connecting 32 the at least one electrically conducting ground conductor to ground potential, and displacing 33 the current collector vertically and/or laterally to connect mechanically and electrically with the at least one electric conductor and with the at least one ground conductor, and propelling 34 the vehicle using electric power obtained from the rail element via the current collector.

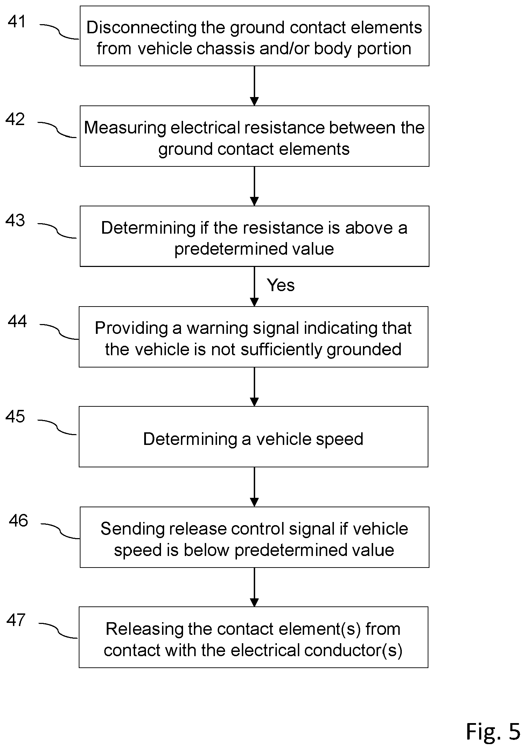

Fig. 5 shows a flow chart illustrating additional methods steps comprised in another embodiment of a method according to the invention. The steps in fig. 5 taken alone may also be considered a method for determining ground contact in a system according to the first aspect of the invention having at least two ground conductors and ground contact elements. The method comprises disconnecting 41 the ground contact elements from electrical contact with the chassis and/or body portion of the vehicle, measuring 42 electrical resistance between the ground contact elements, determining 43 if the resistance is above a predetermined value, providing 44, if the resistance is above the predetermined value, a warning signal indicating that the vehicle is not sufficiently grounded, determining 45 a vehicle speed, sending 46, in response to the warning signal, a release control signal to the current collector if the vehicle speed is below a predetermined level such as 20 km/h, using, in response to the release control signal, the current collector (or means configured to co-act with the current collector, such as an actuator or motor) to release 47 the at least one contact element from contact with the at least one electrical conductor. The method steps illustrated in fig. 5 may be performed at predetermined intervals while the vehicle is driving, i.e. during step 34 as shown in fig. 4, or during standstill.

The description above and the appended drawings are to be considered as nonlimiting examples of the invention. The person skilled in the art realizes that several changes and modifications may be made within the scope of the invention, which is defined by the features of the independent claims. For example, the rail element may comprise one or more further electric conductor(s), for instance three conductors to provide a three-phase alternating current feed. Furthermore, the electric conductor(s) and ground conductor(s) may have a different cross section than shown in figs. 1-3, and furthermore do not need to be recessed in the rail element as shown in the figures but may be arranged on the inner surface of the groove(s) and/or on top of the rail element. Furthermore, the ground contact element(s) do not need to form part of the current collector in the sense of a single unit which is connected and disconnected with the electric conductor(s) and ground conductor(s) together but may on the contrary be displaceable vertically and/or laterally separately from the contact element(s).

## Claims

1. System (1) for electrical feeding of road vehicles, said system comprising an electrically propellable vehicle (2) and at least one rail element (4; 14; 24) comprising at least two electric conductors (4a, 4b; 14a, 14b), each being arranged in a respective groove (4', 4") in said rail element and being adapted to be put under voltage for supplying electric power to said vehicle, said at least one rail element being located in a road section (5) on which the vehicle (2) is adapted to travel, said vehicle comprising a current collector (3) adapted to co-act with said at least one rail element, wherein the current collector is displaceable vertically and laterally and comprises at least two contact elements (3a, 3b; 13a, 13b), each being adapted to connect mechanically and electrically with a corresponding electric conductor (4a, 4b; 14a, 14b), wherein said at least one rail element is provided with at least one electrically conducting ground conductor (4c, 4d; 14c; 24c, 24d) being connected to ground potential, **characterised in that** said current collector comprises at least one ground contact element (3c, 3d; 13c; 23c, 23d), each being configured to be brought in electrical and mechanical contact with a corresponding ground conductor (4c, 4d; 14c; 24c, 24d),
and wherein said at least one ground contact element is electrically connected to a chassis and/or body portion (2') of said vehicle.

2. System according to claim 1, wherein said at least one rail element (4; 24) is each provided with at least two electrically conducting ground conductors (4c, 4d; 24c, 24d) being connectable to ground potential, wherein said current collector comprises at least two ground contact elements (3c, 3d; 23c, 23d), each being configured to be brought in electrical and mechanical contact with a corresponding ground conductor.

3. System according to claim 2, further comprising control means (6) configured to:
- measure electrical resistance between said ground contact elements (3c, 3d; 23c, 23d);
- determine if the resistance is above a predetermined value;
- provide, if the resistance is above said predetermined value, a warning signal indicating that the vehicle (2) is not sufficiently grounded.

4. System according to claim 3, wherein said control means (6) is further configured to send, in response to said warning signal, a control signal to release said at least one contact element (3a, 3b) from contact with said at least one electrical conductor (4a, 4b).

5. System according to claim 4, wherein said control means (6) is configured to send said control signal only if a vehicle speed is below a predetermined level.

6. System according to any of claims 2-5, wherein said ground conductors (4c, 4d; 24c, 24d) are disposed on vertical side wall portions of the at least one groove in said rail element, and wherein the current collector is configured to press the ground contact elements laterally towards said ground conductors to make contact therewith.

7. System according to claim 1, wherein said at least one electrically conducting ground conductor (24c, 24d) is provided in at least one groove (24‴) in said rail (24) being separate from the at least one groove (24', 24") carrying the at least one electric conductor.

8. System according to any of claims 1-6, comprising two electric conductors (4a, 4b; 14a, 14b), wherein said at least one electrically conducting ground conductor (4c, 4d; 14c; 24c, 24d) is arranged at a top portion of said rail element between the two grooves (4', 4") in which said two electric conductors are arranged.

9. Method for electrical feeding of a road vehicle in a system according to claim 1, said method comprising:
- connecting (31) the at least two electric conductors to a source of electric power;
- connecting (32) the at least one electrically conducting ground conductor to ground potential, and
- displacing (33) the current collector vertically and/or laterally to connect mechanically and electrically with the at least two electric conductors and with the at least one ground conductor.

10. Method according to claim 9, where said system is a system according to claim 2, said method further comprising:
- disconnecting (41) said ground contact elements from electrical contact with said chassis and/or body portion of said vehicle;
- measuring (42) electrical resistance between said ground contact elements;
- determining (43) if the resistance is above a predetermined value;
- providing (44), if the resistance is above said predetermined value, a warning signal indicating that the vehicle is not sufficiently grounded.

11. Method according to claim 10, further comprising:
- Sending (46), in response to said warning signal, a release control signal to said current collector
- using, in response to said release control signal, the current collector to release (47) said at least one contact element from contact with said at least one electrical conductor.

12. Method according to claim 11, wherein said step of sending comprises determining (45) a vehicle speed and sending said control signal only if said vehicle speed is below a predetermined level.

## Patentansprüche

1. System (1) zum elektrischen Speisen von Straßenfahrzeugen, wobei das System ein elektrisch antreibbares Fahrzeug (2) und mindestens ein Schienenelement (4; 14; 24) umfasst, das mindestens zwei elektrische Leiter (4a, 4b; 14a, 14b) umfasst, die jeweils in einer entsprechenden Nut (4', 4'') in dem Schienenelement angeordnet sind und unter Spannung gesetzt werden können, um das Fahrzeug mit elektrischer Energie zu versorgen, wobei sich das mindestens eine Schienenelement in einem Straßenabschnitt (5) befindet, auf dem sich das Fahrzeug (2) bewegen kann, wobei das Fahrzeug einen Stromabnehmer (3) umfasst, der mit dem mindestens einen Schienenelement zusammenwirken kann, wobei der Stromabnehmer vertikal und seitlich verschiebbar ist und mindestens zwei Kontaktelemente (3a, 3b; 13a, 13b) umfasst, von denen jedes so angepasst ist, dass es mechanisch und elektrisch mit einem entsprechenden elektrischen Leiter (4a, 4b; 14a, 14b) verbunden werden kann, wobei das mindestens eine Schienenelement mit mindestens einem elektrisch leitenden Masseleiter (4c, 4d; 14c; 24c, 24d) bereitgestellt wird, der mit dem Massepotential verbunden ist, **dadurch gekennzeichnet, dass**
der Stromabnehmer mindestens ein Massekontaktelement (3c, 3d; 13c; 23c, 23d) umfasst, das jeweils so konfiguriert ist, dass es in elektrischen und mechanischen Kontakt mit einem entsprechenden Masseleiter (4c, 4d; 14c; 24c, 24d) gebracht werden kann,
und wobei das mindestens eine Massekontaktelement elektrisch mit einem Fahrgestell und/oder einem Karosserieabschnitt (2') des Fahrzeugs verbunden ist.

2. System nach Anspruch 1, wobei das mindestens eine Schienenelement (4; 24) jeweils mit mindestens zwei elektrisch leitenden Masseleitern (4c, 4d; 24c, 24d) bereitgestellt ist, die mit dem Massepotential verbunden werden können, wobei der Stromabnehmer mindestens zwei Massekontaktelemente (3c, 3d; 23c, 23d) umfasst, die jeweils dazu konfiguriert sind, mit einem entsprechenden Masseleiter in elektrischen und mechanischen Kontakt gebracht zu werden.

3. System nach Anspruch 2, ferner umfassend Steuermittel (6), das konfiguriert ist zum:
- Messen des elektrischen Widerstands zwischen den genannten Massekontaktelementen (3c, 3d; 23c, 23d);
- Bestimmen, ob der Widerstand über einem vorbestimmten Wert liegt;
- Bereitstellen, wenn der Widerstand über dem vorbestimmten Wert liegt, eines Warnsignals, das angibt, dass das Fahrzeug (2) nicht ausreichend geerdet ist.

4. System nach Anspruch 3, wobei das Steuermittel (6) ferner dazu konfiguriert ist, in Reaktion auf das Warnsignal ein Steuersignal zu senden, um das mindestens eine Kontaktelement (3a, 3b) von dem Kontakt mit dem mindestens einen elektrischen Leiter (4a, 4b) zu lösen.

5. System nach Anspruch 4, wobei das Steuermittel (6) dazu konfiguriert ist, das Steuersignal nur dann zu senden, wenn eine Fahrzeuggeschwindigkeit unter einem vorbestimmten Niveau liegt.

6. System nach einem der Ansprüche 2-5, wobei die Masseleiter (4c, 4d; 24c, 24d) an vertikalen Seitenwandabschnitten der mindestens einen Nut in dem Schienenelement angeordnet sind, und wobei der Stromabnehmer dazu konfiguriert ist, die Massekontaktelemente seitlich in Richtung der Masseleiter zu drücken, um einen Kontakt mit diesen herzustellen.

7. System nach Anspruch 1, wobei der mindestens eine elektrisch leitende Masseleiter (24c, 24d) in mindestens einer Nut (24''') in der Schiene (24) bereitgestellt ist, die von der mindestens einen Nut (24', 24''), die den mindestens einen elektrischen Leiter trägt, separat ist.

8. System nach einem der Ansprüche 1-6, umfassend zwei elektrische Leiter (4a, 4b; 14a, 14b), wobei der mindestens eine elektrisch leitende Masseleiter (4c, 4d; 14c; 24c, 24d) an einem oberen Abschnitt des Schienenelements zwischen den beiden Nuten (4', 4'') angeordnet ist, in denen die beiden elektrischen Leiter angeordnet sind.

9. Verfahren zum elektrischen Speisen eines Straßenfahrzeugs in einem System nach Anspruch 1, wobei das Verfahren umfasst:
- Verbinden (31) der mindestens zwei elektrischen Leiter mit einer elektrischen Stromquelle;
- Verbinden (32) des mindestens einen elektrisch leitenden Masseleiters mit dem Massepotential, und
- Verschieben (33) des Stromabnehmers in vertikaler und/oder seitlicher Richtung, um ihn mechanisch und elektrisch mit den mindestens zwei elektrischen Leitern und dem mindestens einen Masseleiter zu verbinden.

10. Verfahren nach Anspruch 9, wobei das System ein System nach Anspruch 2 ist, wobei das Verfahren ferner umfasst:
- Trennen (41) der Massekontaktelemente von dem elektrischen Kontakt mit dem Fahrgestell und/oder dem Karosserieabschnitt des Fahrzeugs;
- Messen (42) des elektrischen Widerstands zwischen den genannten Massekontaktelementen;
- Bestimmen (43), ob der Widerstand über einem vorbestimmten Wert liegt;
- Bereitstellen (44), wenn der Widerstand über dem vorbestimmten Wert liegt, eines Warnsignals, das angibt, dass das Fahrzeug nicht ausreichend geerdet ist.

11. Verfahren nach Anspruch 10, ferner umfassend:
- Senden (46), als Reaktion auf das Warnsignal, eines Freigabesteuersignals an den Stromabnehmer
- Verwenden des Stromabnehmers als Reaktion auf das Freigabesteuersignal, um das mindestens eine Kontaktelement von dem Kontakt mit dem mindestens einen elektrischen Leiter zu lösen (47).

12. Verfahren nach Anspruch 11, wobei der Schritt des Sendens Bestimmen (45) einer Fahrzeuggeschwindigkeit und Senden des Steuersignals nur dann umfasst, wenn die Fahrzeuggeschwindigkeit unter einem vorbestimmten Niveau liegt.

## Revendications

1. Système (1) pour l'alimentation électrique de véhicules routiers, ledit système comprenant un véhicule à propulsion électrique (2) et au moins un élément de rail (4 ; 14 ; 24) comprenant au moins deux conducteurs électriques (4a, 4b ; 14a, 14b), chacun étant agencé dans une rainure respective (4', 4") dudit élément de rail et étant conçu pour être mise sous tension pour alimenter en énergie électrique ledit véhicule, ledit au moins un élément de rail étant situé dans un tronçon de route (5) sur lequel le véhicule (2) est conçu pour se déplacer, ledit véhicule comprenant un collecteur de courant (3) conçu pour coopérer avec ledit au moins un élément de rail, dans lequel le collecteur de courant est déplaçable verticalement et latéralement et comprend au moins deux éléments de contact (3a, 3b ; 13a, 13b), chacun étant conçu pour se connecter mécaniquement et électriquement à un conducteur électrique correspondant (4a, 4b ; 14a, 14b), dans lequel ledit au moins un élément de rail est pourvu d'au moins un conducteur de masse électriquement conducteur (4c, 4d ; 14c ; 24c, 24d) étant connecté au potentiel de masse,
**caractérisé en ce que**
ledit collecteur de courant comprend au moins un élément de contact de masse (3c, 3d ; 13c ; 23c, 23d), chacun étant configuré pour être mis en contact électrique et mécanique avec un conducteur de masse correspondant (4c, 4d ; 14c ; 24c, 24d), et dans lequel ledit au moins un élément de contact de masse est connecté électriquement à une partie de châssis et/ou de carrosserie (2') dudit véhicule.

2. Système selon la revendication 1, dans lequel ledit au moins un élément de rail (4 ; 24) est pourvu chacun d'au moins deux conducteurs de masse électriquement conducteurs (4c, 4d ; 24c, 24d) pouvant être connectés au potentiel de masse, dans lequel ledit collecteur de courant comprend au moins deux éléments de contact de masse (3c, 3d ; 23c, 23d), chacun étant configuré pour être mis en contact électrique et mécanique avec un conducteur de masse correspondant.

3. Système selon la revendication 2, comprenant en outre un moyen de commande (6) configuré pour :
- mesurer la résistance électrique entre lesdits éléments de contact de masse (3c, 3d ; 23c, 23d) ;
- déterminer si la résistance est supérieure à une valeur prédéterminée ;
- fournir, si la résistance est supérieure à ladite valeur prédéterminée, un signal d'avertissement indiquant que le véhicule (2) n'est pas suffisamment mis à la masse.

4. Système selon la revendication 3, dans lequel ledit moyen de commande (6) est en outre configuré pour envoyer, en réponse audit signal d'avertissement, un signal de commande pour libérer ledit au moins un élément de contact (3a, 3b) du contact avec ledit au moins un conducteur électrique (4a, 4b).

5. Système selon la revendication 4, dans lequel ledit moyen de commande (6) est configuré pour envoyer ledit signal de commande uniquement si une vitesse du véhicule est inférieure à un niveau prédéterminé.

6. Système selon l'une quelconque des revendications 2 à 5, dans lequel lesdits conducteurs de masse (4c, 4d ; 24c, 24d) sont disposés sur des parties de parois latérales verticales d'au moins une rainure dans ledit élément de rail, et dans lequel le collecteur de courant est configuré pour presser latéralement les éléments de contact de masse vers lesdits conducteurs de masse pour établir un contact avec ceux-ci.

7. Système selon la revendication 1, dans lequel ledit au moins un conducteur de masse électriquement conducteur (24c, 24d) est prévu dans au moins une rainure (24‴) dudit rail (24) étant séparée de l'au moins une rainure (24', 24'') portant l'au moins un conducteur électrique.

8. Système selon l'une quelconque des revendications 1 à 6, comprenant deux conducteurs électriques (4a, 4b ; 14a, 14b), dans lequel ledit au moins un conducteur de masse électriquement conducteur (4c, 4d ; 14c ; 24c, 24d) est agencé au niveau d'une partie supérieure dudit élément de rail entre les deux rainures (4', 4") dans lesquelles lesdits deux conducteurs électriques sont agencés.

9. Procédé pour l'alimentation électrique d'un véhicule routier dans un système selon la revendication 1, ledit procédé comprenant :
- la connexion (31) des au moins deux conducteurs électriques à une source d'énergie électrique ;
- la connexion (32) de l'au moins un conducteur de masse électriquement conducteur au potentiel de masse, et
- le déplacement (33) du collecteur de courant verticalement et/ou latéralement pour se connecter mécaniquement et électriquement aux au moins deux conducteurs électriques et à l'au moins un conducteur de masse.

10. Procédé selon la revendication 9, dans lequel ledit système est un système selon la revendication 2, ledit procédé comprenant en outre :
- la déconnexion (41) desdits éléments de contact de masse du contact électrique avec ladite partie de châssis et/ou de carrosserie dudit véhicule ;
- la mesure (42) de la résistance électrique entre lesdits éléments de contact de masse ;
- le fait de déterminer (43) si la résistance est supérieure à une valeur prédéterminée ;
- la fourniture (44), si la résistance est supérieure à ladite valeur prédéterminée, d'un signal d'avertissement indiquant que le véhicule n'est pas suffisamment mis à la masse.

11. Procédé selon la revendication 10, comprenant en outre :
- l'envoi (46), en réponse audit signal d'avertissement, d'un signal de commande de libération audit collecteur de courant
- l'utilisation, en réponse audit signal de commande de libération, du collecteur de courant pour libérer (47) ledit au moins un élément de contact du contact avec ledit au moins un conducteur électrique.

12. Procédé selon la revendication 11, dans lequel ladite étape d'envoi comprend la détermination (45) d'une vitesse de véhicule et l'envoi dudit signal de commande uniquement si ladite vitesse de véhicule est inférieure à un niveau prédéterminé.
